# EUROPEAN PATENT SPECIFICATION

(11) **EP 2 747 318 B1**
(45) Date of publication and mention of the grant of the patent: **25.03.2015**
(21) Application number: 12306626.8
(22) Date of filing: 19.12.2012
(51) Int. Cl.: H04J 3/22

(54) **Method and apparatus for transmitting signals in an optical transport network**
Verfahren und Vorrichtung zur Übertragung von Signalen in einem optischen Transportnetzwerk
Procédé et appareil de transmission de signaux dans un réseau de transport optique

(43) Date of publication of application: 25.06.2014
(73) Proprietor: ALCATEL LUCENT, 92100 Boulogne-Billancourt (FR)
(72) Inventor: Loehr, Jürgen, 70190 Stuttgart (DE)
(74) Representative: Wetzel, Emmanuelle

(56) References cited:
- EP-A1- 2 410 673
- EP-A2- 2 237 457
- Exar Corp: "ODUflex in Detail", , 31 October 2011 (2011-10-31), XP055061818, Retrieved from the Internet: URL:http://www.exar.com/uploadedfiles/prod ucts/communications/xrwp_1011_of.pdf [retrieved on 2013-05-03]

## Description

### Field of the Invention

The present invention relates to the field of telecommunications and more particularly to a method and related apparatus for transmitting optical signals in an Optical Transport Network.

### Background of the Invention

The ITU has defined in ITU-T G.709 the signals format and interfaces of the Optical Transport Network (OTN). The basic frame structure is an Optical Transport Module of size k (OTUk), where k can be 1, 2, 2e, 3, 3e2, or 4. It contains framing and section overhead plus a bit-synchronously mapped transport entity termed Optical Data Unit of size k (ODUk). An ODUk contains a payload area plus ODUk overhead. An Optical Payload Unit (OPUk) is mapped into the payload area and carries a client signal or other lower order ODUs being time-division multiplexed. OTUk signals are asynchronous within certain specified limits of typically ± 20 ppm.

In an Optical Transport Network, connections are switched on ODU level. The ODU is thus the switchable transport entity that travels along a network path. There exists a variety of different client signals mappings and different combinations of lower order ODUj are possible, where k can be any of 0, 1, 2, 2e, 3, or flex. An ODUflex for instance has a rate, which is a multiple of -1.24 Gbit/s.

To create an OTU frame, a client signal rate is first adapted at the OPU layer and the client signal rate adjusted to the OPU rate. The OPU overhead contains information to support the adaptation of the client signal. The adapted OPU is then mapped into the ODU. The ODU overhead contains overhead bytes that allow end-to-end supervision and tandem connection monitoring. Finally, the ODU is mapped into an OTU, which provides framing as well as section monitoring and forward error correction (FEC).

The document 'EXAR CORP "ODUflex in Detail"', 31 October 2011, retrieved from the Internet: http://www.exar.com/uploadedfiles/products/communications/ xrwp_1011_of.pdf (retrieved on 2013-05-03) describes how the ODUflex is used as a flexible rate ODU as a resizeable container into which packet flows which do not have a constant bit rate can be packaged. The ODUflex are always multiplexed into a higher fixed-rate ODUk for transport in the OTN. The rate of the ODUflex is always defined to fit an integer number of tributary slots of a higher rate ODUk.

The document EP 2 410 637 A1 (Huawei Tech Co LTD [Cn]) is concerned with transparent transmission of fixed length OTA signals.

The document EP 2 237 457 A2 (Huawei Tech Co LTD [Cn]) is concerned with encapsulation granularity.

### Summary of the Invention

The multiplexing structure of the OTN according to ITU-T G.709 was defined over a long time. Due to addition of new client types, such as GbE and 10GbE, the multiplexing structure became more and more complex over time. In addition, some more mappings and interface types were defined in a non-normative way, which are contained in ITU-T G.sup43. The resulting multiplexing structure is complex and thus complex to implement and manage in a network element.

According to the present embodiments, a simplification through remapping of ODUs into ODUflex is described below.

In particular, a transport signal which has a frame structure referred to as Optical Transport Units will be transmitted through an Optical Transport Network domain. Each Optical Transport Unit contains at least one Optical Data Unit of fixed size with an overhead section and a payload section. A edge network node of the Optical Transport Network domain receives the transport signal and remaps the at least one Optical Data Unit of fixed size into a domain-internal lower order Optical Data Unit of flexible size, which size is configurable in granularity of predefined tributary slots of a higher order Optical Data Unit of fixed size. Within the Optical Transport Network domain, the remapped domain-internal lower order Optical Data Unit of flexible size is transmitted as payload of a domain-internal higher order Optical Data Unit of fixed size.

At the far end edge network node where the domain-internal lower order Optical Data Unit of flexible size is received as payload of a domain-internal higher order Optical Data Unit of fixed size, the domain-internal lower order Optical Data Unit of flexible size is de-mapped back into a recovered Optical Data Unit of fixed size.

### Brief Description of the Drawings

Preferred embodiments of the present invention will now be described with reference to the accompanying drawings in which
- figure 1: shows the multiplexing structure according to G.709;
- figure 2: shows a multiplexing structure with ODUk remapping using ODUflex as unitary lower order ODU;
- figure 3: shows a network with simplified ODUflex switching and ODUk remapping at boarder nodes;
- figure 4: shows a diagram representing the functional model of ODUk/ODUflex remapping; and
- figure 5: an interface for ODUk/ODUflex remapping.

### Detailed Description of the Invention

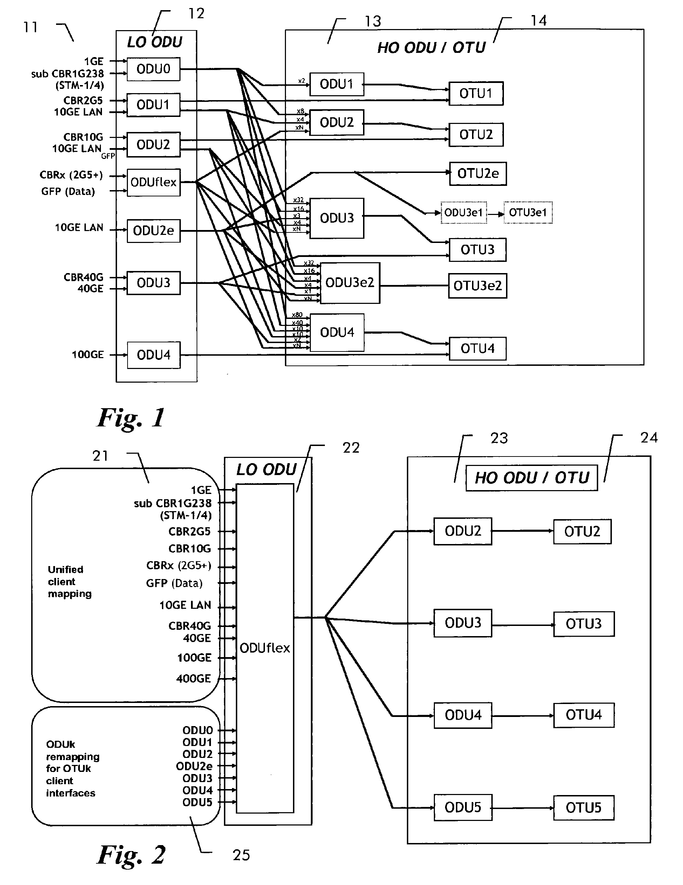

Figure 1 shows an overview of the multiplexing structure currently used in G.709 networks. Different mappings are defined for different client signals 11 into different type of lower order ODUk 12, which can then be multiplexed into different size higher order ODUk 13 and then synchronously mapped into corresponding OTUk frames 14. This multiplexing structure will even be complicated by the future introduction of a next higher ODUk rate of approximately 400Gb that will then be termed ODU5.

To simplify this multiplexing hierarchy, the inventor proposes to map all kind of client signals into lower order ODUflex and remap existing ODUk into order ODUflex.

The resulting multiplexing hierarchy is shown schematically in figure 2. All client signals 21, independent of their type and origin will be mapped into ODUflex 22. Existing ODUk 25 will be re-mapped into ODUflex 22. ODUflex 22 will then be multiplexed and mapped into a higher order ODUk 23 corresponding to the line rate and transported in a corresponding OTUk frame 24.

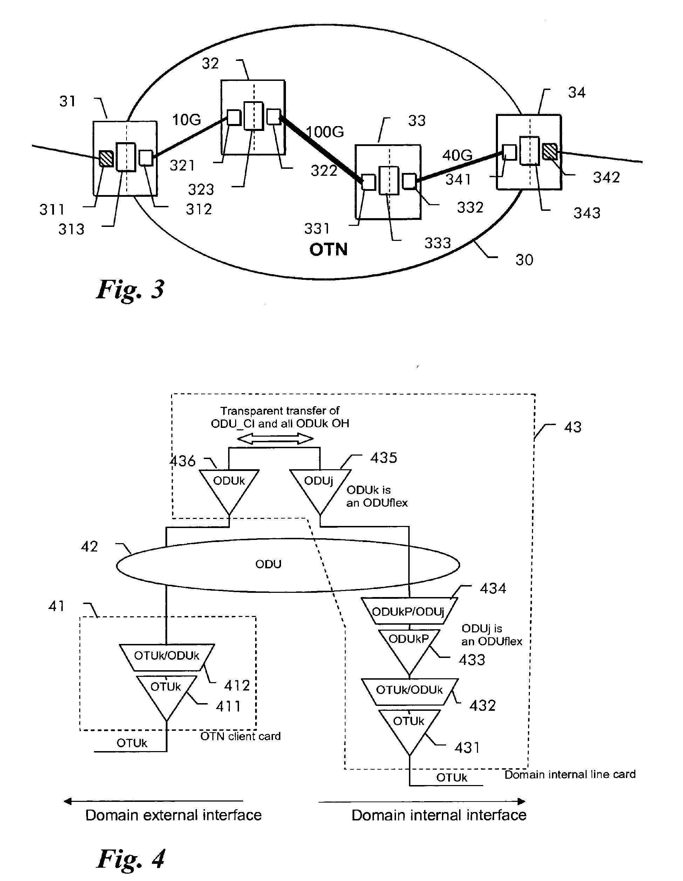

A network with simplified ODUk switching is shown schematically in figure 3. Within OTN domain 30, there are different network nodes 31-34. Nodes 31 and 34 represent boarder nodes, which can receive and transmit any kind of ODUk signals at interfaces 311, 342. Within OTN domain 30, all network nodes 31-34 transmit only signals carrying lower order (LO) ODUflex.

For instance, network node 31 receives an ODUk signal where k can be any valid value. An internal switch function 313 is provided, which connects the received ODUk to interface 312. Interface 312 contains an ODU remapping function to remap the ODU into LO ODUflex, adapt it to an appropriate higher order (HO) ODUk and map the latter to a corresponding OTUk for transport with OTN domain 30. It should be noted, that the remapping function could in principle also be located in interface 312. Received client signals other than ODUk are mapped into ODUflex as shown in figure 2.

Node 32 contains interfaces 321, 322 and internal switch function 323 interconnecting interfaces 321, 322. Similarly, node 33 contains interfaces 331, 332 and an internal switch function 333 interconnecting interfaces 331, 332. Interfaces 321, 322 and 331, 332 receive and transmit only signals carrying LO ODUflex. Node 34 receives and transmits at interface 341 signals carrying ODUflex and at interface 342signals capable of carrying any kind of ODUk signals. Switch function 343 interconnects interfaces 341, 342. Interface 341 contains a remapping function for converting received LO ODUflex into ODUk as pre-configured at interface 342

The signal between nodes 31 and 32 has a rate of 10G corresponding to OTU2, the signal between nodes 32 and 33 has a rate of 100G corresponding to OTU4, and the signal between nodes 33 and 34 has a rate of 40G corresponding to OTU3. Therefore, at node 31, the re-mapped LO ODUflex is mapped into HO ODU2, in node 32, ODUflex received at interface 321 is mapped into HO ODU4, and at node 33, received ODUflex is mapped into HO ODU3.

Figure 4 shows the functional model of the ODUk/ODUflex remapping function implemented into boarder nodes 31, 34, respectively. Towards an external network domain, a usual OTN line cards 41 is provided, which has a OTUk termination function 411 and an OTUk/ODUk adaptation function. An interconnection function 42, such as an ODU switch matrix, interconnects the various line card 41, 43 of the network node.

An OTN line card 43 is provided towards an internal network domain. Similar to line card 41, line card 43 contains a OTU termination function 431 and a OTUk/ODUj adaptation function 432. Additionally, line card 43 contains a ODUk termination function 436 for ODUk received from connection function 42 and an ODU termination function 435 for LO ODUflex. ODU termination functions 436 and 435 are interconnected. Since ODUflex cannot be mapped directly into OTUk, higher order ODUk termination function 433 and ODUk/ODUj adaptation function 434 are provided between ODU termination function 435 and 432.

It should be noted that figure 4 shows the case with only a single incoming HO ODUk being mapped to one single internal LO ODUflex. However, all combinations with external HO or LO ODUk and internal one single or several LO ODUflex are covered by the invention as well and could be implemented by those skilled in the art using the mapping principles and procedures known from G.709. In all these cases, the re-mapping part above ODU connection function 42 remains unchanged.

It should be understood that the connection between 435 and 434 does not necessarily go physically through connection function 42 even if this is the case in the functional view of figure 4. The actual physical implementation is implementation specific.

ODUflex uses 1.25 Gbit/s tributary time slots of a higher order ODUk (k>1) to create a variable size container and can either transport a constant bitrate (CBR) client signal using Bit-synchronous Mapping Procedure (BMP), or can carry packet data flows encapsulated with Generic Framing Procedure (GFP).

ODUflex are in any case multiplexed into a higher, fixed rate ODUk for transport in the OTN. As with all cases of ODUj to ODUk multiplexing, the lower rate ODUj occupies some number of Tributary Slots of the higher rate ODUk. For ODUflex multiplexing, the Tributary Slot granularity is roughly 1.25Gbit/s. Since ODUflex are effectively asynchronous to the ODUk into which they are multiplexed, a mapping mechanism termed Generic Mapping Procedure (GMP) is employed.

GMP is a mechanism used to accommodate the nominal bit-rate difference between a client and server layer, and the clock variations that may occur between client and server layer signals. No distinction is made between fixed and variable stuff locations. The server frame (or multi-frame) is divided into a certain number of GMP words, where each word may contain either data or stuff. Words containing data are distributed as evenly as possible, quantized to word size, across the server frame using a sigma/delta distribution algorithm.

Proper operation depends only on mapper and demapper knowing the number of data words which are filled into each frame (or multi-frame). Larger GMP word sizes are used for higher bit-rate clients to avoid the need for large barrel shifters. Additional timing information may be transmitted from the mapper to the demapper to meet the timing requirements of the client if necessary. This allows the demapper to know how many client bytes (or bits) are to be emitted by the demapper during each server frame period.

The formula governing the Sigma/Delta algorithm is as follows:
Content of each Payload position is
   - data, if (Payload position x data byte count) mod (Pₛₑᵣᵥₑᵣ) < data word count and
   - stuff, if (Payload position x data byte count) mod (P_{Server}) ≥ data word count,
where P_{Server} is the total number of word positions in the server frame payload.

P_{Server} is always known and fixed. Similarly, the payload position being evaluated is also inherently known. The final variable, the data word count, changes from frame to frame to match the rate of the client being mapped. For each frame, the appropriate count is determined by the mapper and signaled in the OPUk overhead to the demapper using the JC1/2/3 bytes.

The count being signaled is 14 bits, to support the 15232 payload bytes in an OPUk frame, and spans both JC1 and JC2. To ensure robustness at the receiver in the presence of bit errors, JC3 contains a CRC-8 which allows error detection and certain amount of error correction. There is also an encoding for count increments or decrements and a state machine at the receiver is used to manage the values received and protect against bit errors. The demapper requires the count before the first payload position occurs, so it has to be determined and signaled in the previous frame. While, as explained, ODUflex is always mapped into HO ODUk using GMP, G.709 defines that some other LO ODUj use the asynchronous mapping procedure (AMP) for mapping into HO ODUk. The PSI field in the OPUk OH contains a payload type (PT) value, which defines the tributary slot size for multiplexing of LO ODUj into HO ODUk. Table 7-10 below, taken from G.709, defines the applicable mapping procedure and payload type values.

**Table 7-10 - Overview of ODUj into OPUk mapping types**

| | **2.5G tributary slots** | | **1.25G tributary slots** | | | |
|---|---|---|---|---|---|---|
| | **OPU2** | **OPU3** | **OPU1** | **OPU2** | **OPU3** | **OPU4** |
| ODU0 | - | - | AMP (PT=20) | GMP (PT=21) | GMP (PT=21) | GMP (PT=21) |
| ODU1 | AMP (PT=20) | AMP (PT=20) | - | AMP (PT=21) | AMP (PT=21) | GMP (PT=21) |
| ODU2 | - | AMP (PT=20) | - | - | AMP (PT=21) | GMP (PT=21) |
| ODU2e | - | - | - | - | GMP (PT=21) | GMP (PT=21) |
| ODU3 | - | - | - | - | - | GMP (PT=21) |
| ODUflex. | - | - | - | GMP (PT=21) | GMP (PT=21) | GMP (PT=21) |

Thus, re-mapping of ODUk into LO ODUflex may require a change of the payload type value and a change of the applicable mapping procedure, i.e. from AMP to GMP.

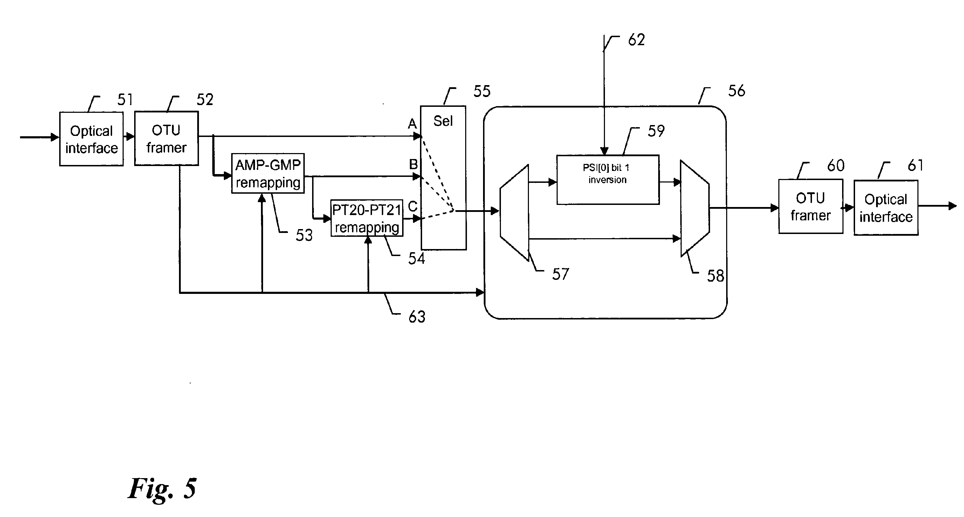

Figure 5 shows a block diagram of the re-mapping function implemented within a boarder network node 31, 34, in figure 3.

A optical interface 51, for example a coherent optical receiver, receives an optical line signal and converts it into an electrical data signal, which is fed to a framer 52. Framer 52 scans the data signal for a frame alignment signal (FAS) and, when locked to a FAS, terminates the section overhead. The output of framer 52 is fed to a selector 55 and to a processor 53, which converts the mapping procedure from AMP to GMP if required. The output of processor 53 is fed to selector 55 and to a processor function 54, which changes the payload type from type 20 to type 21, if required. The output of selector 55 is connected to a remapper 56. A clock signal 63 derived at framer 52 is used to drive processors 53, 54 and remapper 56.

Remapper 56 contains a demultiplexer 57, which extracts the OPUk payload bytes and ODUk overhead bytes from the received input and transfers it 1:1 to a multiplexer 58, which re-maps the payload and overhead into a LO ODUflex and multiplexes the latter into a HO ODUk. No recalculation of BIP-8 parity blocks from the received signal is required.

The clock of the LO ODUflex is determined by the clock of the ODUk that is being remapped to the LO ODUflex to allow timing transparency. Conversely, at the far end edge node, where the ODUflex is "demapped" into the original ODUk format, the recovered ODUk clock is determined by the LO ODUflex, thus allowing full end-to-end timing transparency.

The output of multiplexer 58 is fed to an OTU framer 60, which adds framing and section overhead and forwards the signal to a transmit-side optical interface 61. At optical interface 61, the signal is modulated onto an optical carrier for transmission over an optical fiber section.

It should be understood that for the sake of simplicity, only one direction, with remapping ODUk into LO ODUflex, i.e. domain external interface towards domain internal interface, is shown. However, the opposite direction works symmetrical, with LO ODUflex clock driving the demapping process. It should be understood, however, that since the re-mapped ODUflex is a valid G.709 signal, demapping back into the original ODUk format is not necessary, depending on the application.

Selector 55 selects from the three processing paths, i.e. (1) no AMP-GMP remapping and no PT remapping, (2) AMP-GMP remapping and no PT remapping, (3) both AMP-GMP and PT remapping, depending on the type of input ODUk and its payload type value according to table 7-10 of ITU-T G.709 shown above.

In a further improvement, an OPUk OH byte is used to indicate that the signal has been remapped. It should be understood that in principle as a matter of definition, any available overhead bit can be used to indicate that the ODUflex has been remapped from another ODUk. However, it is preferable to re-use the existing payload structure identifier (PSI) for this additional purpose.

In particular, the bit 1 (MSB) of PSI[0] is inverted for valid payload type code points (0x01 to 0x21) to indicate that the LO ODUflex transports a remapped ODUk. The inversion is performed when mapping ODUk into LO ODUflex and when mapping LO ODUflex back into ODUk. For other PSI[0] values than 0x01 to 0x21 resp. 0x81 to 0xa1 there is no inversion, in this case PSI[0] is mapped unchanged. In case the optional modification is not performed, PSI[0] is mapped unchanged, consequently there is no indication in the LO ODUflex that indicates the transport of an ODUk in the LO ODUflex.

It is a configuration parameter of the mapping function if the optional PSI[0] inversion is performed or not. Other PSI bytes than PSI[0] are mapped unchanged.

Accordingly, an inverter 59 is located between demultiplexer 57 and multiplexer 58, which inverts the extracted PSI[0] bit. A control signal 62 activates or deactivates the PSI[0] bit inversion.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled or described as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, the selector shown in figure 5 is conceptual only. Its function may be carried out through the operation of program logic, through dedicated logic, through the interaction of program control and dedicated logic, or even manually, the particular technique being selectable by the implementer as more specifically understood from the context.

## Claims

1. A method of transmitting a transport signal through an Optical Transport Network domain (30), said transport signal having a frame structure referred to as Optical Transport Units, each Optical Transport Unit comprising at least one Optical Data Unit of fixed size (25) with an overhead section and a payload section; the method comprising:
- receiving said transport signal at a edge network node (31) of said Optical Transport Network domain (30);
- remapping said at least one Optical Data Unit of fixed size (25) into a domain-internal lower order Optical Data Unit of flexible size (22), which size is configurable in granularity of predefined tributary slots of a higher order Optical Data Unit of fixed size (23); and
- transmitting said domain-internal lower order Optical Data Unit of flexible size (22) as payload of a domain-internal higher order Optical Data Unit of fixed size (23) through said Optical Transport Network domain (30).

2. A method according to claim 1, wherein in case the frame structure of said transport signal contains a single higher order Optical Data Unit of fixed size (25), only, said single higher order Optical Data Unit is remapped into said domain-internal lower order Optical Data Unit of flexible size (22), and wherein in case the frame structure of said transport signal contains multiple lower order Optical Data Units of fixed size (25), said lower order Optical Data Units are remapped individually into domain-internal lower order Optical Data Units of flexible size (22).

3. A method according to claim 1,comprising determining a mapping procedure applied to map said at least one Optical Data Unit of fixed size (25) into the frame structure of said transport signal, and in case said mapping procedure is an Asynchronous Mapping Procedure, changing said mapping procedure by remapping said at least one Optical Data Unit of fixed (25) size into said domain-internal lower order Optical Data Unit of flexible size (22) using a Generic Mapping Procedure.

4. A method according to claim 1,comprising changing a Payload Type value to a value prescribed for the mapping of Optical Data Units of flexible size (22).

5. A method according to claim 1,comprising inserting into a Path Overhead field an information to indicate that said domain-internal lower order Optical Data Unit of flexible size (22) transports a remapped Optical Data Unit of fixed size (25).

6. A method according to claim 5, wherein said Path Overhead field is a Payload Structure Identifier field and said information is encoded by inverting a predefined bit, preferably bit 1, of an existing Payload Structure Identifier.

7. A method according to claim 1, wherein said domain-internal lower order Optical Data Unit of flexible size (22) is created using a clock signal (63) derived from said Optical Data Unit of fixed size (25) being remapped.

8. A method according to claim 1, comprising, at the far end edge network node (34), receiving said domain-internal lower order Optical Data Unit of flexible size (22) as payload of a domain-internal higher order Optical Data Unit of fixed size (23) and demapping said domain-internal lower order Optical Data Unit of flexible size (22) back into a recovered Optical Data Unit of fixed size (25).

9. A method according to claim 8, wherein said recovered Optical Data Unit of fixed size (25) is created using a clock signal derived from the received domain-internal lower order Optical Data Unit of flexible size (22).

10. A network node (31) usable as an edge network node of an Optical Transport Network domain (30), comprising
- a receive side first line interface (311; 51, 52) adapted to receive a transport signal having a frame structure referred to as Optical Transport Units, each Optical Transport Unit comprising at least one Optical Data Unit of fixed size (25) with an overhead section and a payload section;
- a remapper (56) adapted to remap said at least one Optical Data Unit of fixed size (25) into a domain-internal lower order Optical Data Unit of flexible size (22), which size is configurable in granularity of predefined tributary slots of a higher order Optical Data Unit of fixed size (23); and
- a transmit side second Line interface (312; 60, 61) adapted to transmit said domain-internal lower order Optical Data Unit of flexible size (22) as payload of a higher order Optical Data Unit of fixed size (23).

11. A network node according to claim 10, comprising a processor (53) adapted to determine a mapping procedure applied to map said at least one Optical Data Unit of fixed size (25) into the frame structure of said transport signal, and in case said mapping procedure is an Asynchronous Mapping Procedure, to change said mapping procedure by remapping said at least one Optical Data Unit of fixed size (25) into said domain-internal lower order Optical Data Unit of flexible size (22) using a Generic Mapping Procedure.

12. A network node according to claim 10, comprising a processor (54) adapted to change a Payload Type value to a value defined for a mapping of Optical Data Units of flexible size.

13. A network node according to claims 11 and 12, comprising a selector (55) adapted to select whether said mapping procedure and Payload Type value are to be changed.

14. A network node according to claim 10, comprising a path overhead processor (59) adapted to insert into a Path Overhead field an information to indicate that said domain-internal lower order Optical Data Unit of flexible size (22) transports a remapped Optical Data Unit of fixed size (25).

15. A network node according to claim 10, further comprising
- a receive side second line interface adapted to receive in reverse direction a reverse domain-internal lower order Optical Data Unit of flexible size as payload of a reverse higher order Optical Data Unit of fixed size;
- a demapper adapted to demap said reverse domain-internal lower order Optical Data Unit of flexible size into a recovered Optical Data Unit of fixed size; and
- a transmit side first line interface adapted to transmit a transport signal comprising said recovered Optical Data Unit of fixed size.

## Patentansprüche

1. Verfahren zur Übertragung eines Transportsignals über eine optische Transportnetzwerk-Domain (30), wobei das besagte Transportsignal eine mit optische Transporteinheiten bezeichnete Rahmenstruktur aufweist, wobei jede optische Transporteinheit mindestens eine optische Dateneinheit mit festgelegter Größe (25), welche einen Overhead-Abschnitt und einen Nutzdatenabschnitt enthält, umfasst; wobei das Verfahren umfasst:
- Empfangen des besagten Transportsignals an einem Netzwerkrandknoten (31) der besagten optischen Transportnetzwerk-Domain (30);
- erneutes Abbilden der besagten mindestens einen optischen Dateneinheit mit festgelegter Größe (25) in eine domain-interne optische Dateneinheit niedrigerer Ordnung mit flexibler Größe (22), wobei die Größe in der Granularität von vordefinierten Nebenschlitzen einer optischen Dateneinheit höherer Ordnung mit festgelegter Größe (23) konfigurierbar ist; und
- Übertragen der besagten domain-internen optischen Dateneinheit niedrigerer Ordnung mit flexibler Größe (22) als Nutzdaten einer domain-internen optischen Dateneinheit höherer Ordnung mit festgelegter Größe (23) über die besagte optische Transportnetzwerk-Domain (30).

2. Verfahren nach Anspruch 1, wobei, wenn die Rahmenstruktur des besagten Transportsignals nur eine einzelne optische Dateneinheit höherer Ordnung mit festgelegter Größe (25) enthält, die besagte einzelne optische Dateneinheit höherer Ordnung in die besagte domain-interne optische Dateneinheit niedrigerer Ordnung mit flexibler Größe (22) abgebildet wird, und wobei, wenn die Rahmenstruktur des besagten Transportsignals mehrere optische Dateneinheiten niedrigerer Ordnung mit festgelegter Größe (25) enthält, die besagten optischen Dateneinheiten niedrigerer Ordnung einzeln in domain-interne optische Dateneinheiten niedrigerer Ordnung mit flexibler Größe (22) abgebildet werden.

3. Verfahren nach Anspruch 1, umfassend das Bestimmen einer Abbildungsprozedur, welche angewendet wird, um die besagte mindestens eine optische Dateneinheit mit festgelegter Größe (25) in die Rahmenstruktur des besagten Transportsignals abzubilden, und, wenn die besagte Abbildungsprozedur eine asynchrone Abbildungsprozedur ist, das Ändern der besagten Abbildungsprozedur durch erneutes Abbilden der besagten mindestens einen optischen Dateneinheit mit festgelegter Größe (25) in die besagte domain-interne optische Dateneinheit niedrigerer Ordnung mit flexibler Größe (22) unter Verwendung einer generischen Abbildungsprozedur.

4. Verfahren nach Anspruch 1, umfassend das Ändern des Wertes vom Typ Nutzdaten in einen für das Abbilden von optischen Dateneinheiten mit flexibler Größe (22) vorgeschriebenen Wert.

5. Verfahren nach Anspruch 1, umfassend das Einfügen einer Information in ein Pfad-Overhead-Feld, um anzuzeigen, dass die besagte domain-interne optische Dateneinheit niedrigerer Ordnung mit flexibler Größe (22) eine neu abgebildete optische Dateneinheit mit festgelegter Größe (25) transportiert.

6. Verfahren nach Anspruch 5, wobei das besagte Pfad-Overhead-Feld ein Nutzdatenstrukturkennungsfeld ist und die besagte Information durch Invertieren eines vordefinierten Bits, vorzugsweise Bit 1, einer existierenden Nutzdatenstrukturkennung codiert wird.

7. Verfahren nach Anspruch 1, wobei die besagte domain-interne optische Dateneinheit niedrigerer Ordnung mit flexibler Größe (22) unter Verwendung eines von der besagten erneut abgebildeten optischen Dateneinheit mit festgelegter Größe (25) abgeleiteten Taktsignals (63) erzeugt wird.

8. Verfahren nach Anspruch 1, umfassend, an dem entfernten Netzwerkrandknoten (34), das Empfangen der besagten domain-internen optischen Dateneinheit niedrigerer Ordnung mit flexibler Größe (22) als Nutzdaten einer domain-internen optischen Dateneinheit höherer Ordnung mit festgelegter Größe (23), und das Rückabbilden der besagten domain-internen optischen Dateneinheit niedrigerer Ordnung mit flexibler Größe (22) in eine wiederhergestellte optische Dateneinheit mit festgelegter Größe (25).

9. Verfahren nach Anspruch 8, wobei die besagte wiederhergestellte optische Dateneinheit mit festgelegter Größe (25) unter Verwendung eines von der empfangenen domain-internen optischen Dateneinheit niedrigerer Ordnung mit flexibler Größe (22) abgeleiteten Taktsignals erzeugt wird.

10. Netzwerkknoten (31), verwendbar als ein Netzwerkrandknoten einer optischen Transportnetzwerk-Domain (30), umfassend:
- eine empfangsseitige erste Leitungsschnittstelle (311; 51, 52), welche für den Empfang eines Transportsignals mit einer als optische Transporteinheiten bezeichneten Rahmenstruktur ausgelegt ist, wobei jede optische Transporteinheit mindestens eine optische Dateneinheit mit festgelegter Größe (25), welche einen Overhead-Abschnitt und einen Nutzdatenabschnitt enthält, umfasst;
- eine Remapper (56), welcher für das erneute Abbilden der besagten mindestens einen optischen Dateneinheit mit festgelegter Größe (25) in eine domain-interne optische Dateneinheit niedrigerer Ordnung mit flexibler Größe (22) ausgelegt ist, wobei die Größe in der Granularität von vordefinierten Nebenschlitzen einer optischen Dateneinheit höherer Ordnung mit festgelegter Größe (23) konfigurierbar ist; und
- eine senderseitige zweite Leitungsschnittstelle (312; 60; 61), welche für die Übertragung der besagten domain-internen optischen Dateneinheit niedrigerer Ordnung mit flexibler Größe (22) als Nutzdaten einer optischen Dateneinheit höherer Ordnung mit festgelegter Größe (23) ausgelegt ist.

11. Netzwerkknoten nach Anspruch 10, umfassend einen Prozessor (53), welcher dazu ausgelegt ist, eine für das Abbilden der besagten mindestens einen optischen Dateneinheit mit festgelegter Größe (25) in eine Rahmenstruktur des besagten Transportsignals angewendete Abbildungsprozedur zu bestimmen und, wenn die besagte Abbildungsprozedur eine asynchrone Abbildungsprozedur ist, die besagte Abbildungsprozedur durch erneutes Abbilden der besagten mindestens einen optischen Dateneinheit mit festgelegter Größe (25) in die besagte domain-interne optische Dateneinheit niedrigerer Ordnung mit flexibler Größe (22) unter Verwendung einer generischen Abbildungsprozedur zu ändern.

12. Netzwerkknoten nach Anspruch 10, umfassend einen Prozessor (54), welcher für das Ändern eines Wertes vom Typ Nutzdaten in einen für das Abbilden von optischen Dateneinheiten mit flexibler Größe definierten Wert ausgelegt ist.

13. Netzwerkknoten nach den Ansprüchen 11 und 12, umfassend einen Selektor (55), welcher dazu ausgelegt ist, auszuwählen, ob die besagte Abbildungsprozedur und der besagte Wert vom Typ Nutzdaten geändert werden sollen.

14. Netzwerkknoten nach Anspruch 10, umfassend einen Pfad-Overhead-Prozessor (59), welcher dazu ausgelegt ist, eine Information in ein Pfad-Overhead-Feld einzufügen, um anzuzeigen, dass die besagte domain-interne optische Dateneinheit niedrigerer Ordnung mit flexibler Größe (22) eine neu abgebildete optische Dateneinheit mit festgelegter Größe (25) transportiert.

15. Netzwerkknoten nach Anspruch 10, weiterhin umfassend:
- eine empfangsseitige zweite Leitungsschnittstelle, welche für den Empfang, in Rückwärtsrichtung, einer domain-internen optischen Rückwärts-Dateneinheit niedrigerer Ordnung mit flexibler Größe als Nutzdaten einer optischen Rückwärts-Dateneinheit höherer Ordnung mit festgelegter Größe ausgelegt ist;
- einen Demapper, welcher für das Rückabbilden der besagten domain-internen optischen Rückwärts-Dateneinheit niedrigerer Ordnung mit flexibler Größe in eine wiederhergestellte optische Dateneinheit mit festgelegter Größe ausgelegt ist; und
- eine senderseitige erste Leitungsschnittstelle, welche für die Übertragung eines Transportsignals, welches die besagte wiederhergestellte optische Dateneinheit mit festgelegter Größe umfasst, ausgelegt ist.

## Revendications

1. Procédé de transmission d'un signal de transport à travers un domaine de réseau de transport optique (30), ledit signal de transport présentant une structure de trame appelée unités de transport optiques, chaque unité de transport optique comprenant au moins une unité de données optique de taille fixe (25) avec une section de surdébit et une section de charge utile ; le procédé comprenant les étapes suivantes :
- recevoir ledit signal de transport au niveau d'un noeud de réseau périphérique (31) dudit domaine de réseau de transport optique (30) ;
- remapper ladite au moins une unité de données optique de taille fixe (25) en une unité de données optique d'ordre inférieur interne au domaine de taille flexible (22), dont la taille est configurable en granularité de créneaux tributaires prédéfinis d'une unité de données optique d'ordre supérieur de taille fixe (23) ; et
- transmettre ladite unité de données optique d'ordre inférieur interne au domaine de taille flexible (22) en tant que charge utile d'une unité de données optique d'ordre supérieur interne au domaine de taille fixe (23) à travers ledit domaine de réseau de transport optique (30).

2. Procédé selon la revendication 1, dans lequel dans le cas où la structure de trame dudit signal de transport contiendrait une unité de données optique d'ordre supérieur unique de taille fixe (25), seule ladite unité de données optique d'ordre supérieur unique est remappée en ladite unité de données optique d'ordre inférieur interne au domaine de taille flexible (22), et dans lequel dans le cas où la structure de trame dudit signal de transport contiendrait des unités de données optiques d'ordre inférieur multiples de taille fixe (25), lesdites unités de données optiques d'ordre inférieur sont remappées individuellement en unités de données optiques d'ordre inférieur internes au domaine de taille flexible (22).

3. Procédé selon la revendication 1, comprenant la détermination d'une procédure de mappage appliquée pour mapper ladite au moins une unité de données optique de taille fixe (25) en la structure de trame dudit signal de transport et, dans le cas où ladite procédure de mappage serait une procédure de mappage asynchrone, le changement de ladite procédure de mappage en remappant ladite au moins une unité de données optique de taille fixe (25) en ladite unité de données optique d'ordre inférieur interne au domaine de taille flexible (22) en utilisant une procédure de mappage générique.

4. Procédé selon la revendication 1, comprenant le changement d'une valeur de type de charge utile en une valeur recommandée pour le mappage d'unités de données optiques de taille flexible (22).

5. Procédé selon la revendication 1, comprenant l'insertion dans un champ de surdébit de conduit d'informations pour indiquer que ladite unité de données optique d'ordre inférieur interne au domaine de taille flexible (22) transporte une unité de données optique remappée de taille fixe (25).

6. Procédé selon la revendication 5, dans lequel ledit champ de surdébit de conduit est un champ d'identificateur de structure de charge utile et lesdites informations sont codées en inversant un bit prédéfini, de préférence le bit 1, d'un identificateur de structure de charge utile existant.

7. Procédé selon la revendication 1, dans lequel ladite unité de données optique d'ordre inférieur interne au domaine de taille flexible (22) est créée en utilisant un signal d'horloge (63) dérivé de ladite unité de données optique de taille fixe (25) qui est remappée.

8. Procédé selon la revendication 1, comprenant, au niveau du noeud de réseau périphérique distant (34), la réception de ladite unité de données optique d'ordre inférieur interne au domaine de taille flexible (22) en tant que charge utile d'une unité de données optique d'ordre supérieur interne au domaine de taille fixe (23) et le démappage de ladite unité de données optique d'ordre inférieur interne au domaine de taille flexible (22) en une unité de données optique récupérée de taille fixe (25).

9. Procédé selon la revendication 8, dans lequel ladite unité de données optique récupérée de taille flexible (25) est créée en utilisant un signal d'horloge dérivé de l'unité de données optique d'ordre inférieur interne au domaine reçue de taille flexible (22).

10. Noeud de réseau (31) utilisable comme un noeud de réseau périphérique d'un domaine de réseau de transport optique (30), comprenant
- une première interface de ligne côté réception (311 ; 51, 52) adaptée pour recevoir un signal de transport présentant une structure de trame appelée unités de transport optiques, chaque unité de transport optique comprenant au moins une unité de données optique de taille fixe (25) avec une section de surdébit et une section de charge utile ;
- un remappeur (56) adapté pour remapper ladite au moins une unité de données optique de taille fixe (25) en une unité de données optique d'ordre inférieur interne au domaine de taille flexible (22), dont la taille est configurable en granularité de créneaux tributaires prédéfinis d'une unité de données optique d'ordre supérieur de taille fixe (23) ; et
- une deuxième interface de ligne côté transmission (312 ; 60, 61) adaptée pour transmettre ladite unité de données optique d'ordre inférieur interne au domaine de taille flexible (22) en tant que charge utile d'une unité de données optique d'ordre supérieur de taille fixe (23).

11. Noeud de réseau selon la revendication 10, comprenant un processeur (53) adapté pour déterminer une procédure de mappage appliquée pour mapper ladite au moins une unité de données optique de taille fixe (25) en la structure de trame dudit signal de transport et, dans le cas où ladite procédure de mappage serait une procédure de mappage asynchrone, pour changer ladite procédure de mappage en remappant ladite au moins une unité de données optique de taille fixe (25) en ladite unité de données optique d'ordre inférieur interne au domaine de taille flexible (22) en utilisant une procédure de mappage générique.

12. Noeud de réseau selon la revendication 10, comprenant un processeur (54) adapté pour changer une valeur de type de charge utile en une valeur définie pour un mappage d'unités de données optiques de taille flexible.

13. Noeud de réseau selon les revendications 11 et 12, comprenant un sélecteur (55) adapté pour sélectionner si ladite procédure de mappage et ladite valeur de type de charge utile doivent être changées.

14. Noeud de réseau selon la revendication 10, comprenant un processeur de surdébit de conduit (59) adapté pour insérer dans un champ de surdébit de conduit des informations pour indiquer que ladite unité de données optique d'ordre inférieur interne au domaine de taille flexible (22) transporte une unité de données optique remappée de taille fixe (25).

15. Noeud de réseau selon la revendication 10, comprenant en outre
- une deuxième interface de ligne côté réception adaptée pour recevoir en sens inverse une unité de données optique d'ordre inférieur interne au domaine inverse de taille flexible en tant que charge utile d'une unité de données optique d'ordre supérieur inverse de taille fixe ;
- un démappeur adapté pour démapper ladite unité de données optique d'ordre inférieur interne au domaine inverse de taille flexible en une unité de données optique récupérée de taille fixe ; et
- une première interface de ligne côté transmission adaptée pour transmettre un signal de transport comprenant ladite unité de données optique récupérée de taille fixe.
